# EUROPEAN PATENT APPLICATION

(11) **EP 3 922 810 A1**
(43) Date of publication of application: **15.12.2021**
(21) Application number: 20179175.3
(22) Date of filing: 10.06.2020
(51) Int. Cl.: E21B 43/08, B01D 29/46

(54) **SEPARATING DEVICE AND USE OF A SEPARATING DEVICE**

(71) Applicant: 3M Innovative Properties Company, Saint Paul, MN 55133-3427 (US)
(72) Inventor: Victor, Georg, 87487 Wiggensbach (DE)
(74) Representative: Mössner, Brigitte

(57) **Abstract**

The present disclosure relates to a separating device for removing solid particles from fluids, and to the use of said separating device for removing solid particles from fluids.

## Description

### Technical Field

The present disclosure relates to a separating device for the removal of solid particles from a fluid.

### Background

Such separating devices are required in many oil and gas extraction wells. Mineral oil and natural gas are stored in naturally occurring underground reservoirs, the oil or gas being distributed in more or less porous and permeable mineral layers. The aim of every oil or gas drill hole is to reach the reservoir and exploit it in such a way that, as far as possible, only saleable products such as oil and gas are extracted, while undesired by-products are minimized or even avoided completely. The undesired by-products in oil and gas extraction include solid particles such as sands and other mineral particles that are entrained from the reservoir up to the borehole by the liquid or gas flow.

Since the mineral sands are often abrasive, the influx of such solids into the production tubing and pump cause considerable undesired abrasive and erosive wear on all of the technical internals of the borehole. It is therefore endeavoured to free the production flow of undesired sands directly after it leaves the reservoir, that is to say while it is still in the borehole, by filter systems.

Problems of abrasion and erosion in the removal of solid particles from liquid and gas flows are not confined to the oil and gas industry, but may also occur in the extraction of water. Water may be extracted for the purpose of obtaining drinking water or else for the obtainment of geothermal energy. The porous, often loosely layered reservoirs of water have the tendency to introduce a considerable amount of abrasive particles into the material that is extracted. In these applications too, there is the need for abrasion- and erosion-resistant filters. Also in the extraction of ore and many other minerals, there are problems of abrasion and erosion in the removal of solid particles from liquid and gas flows.

In oil and gas extraction, the separation of undesired particles is usually achieved today by using filters that are produced by spirally winding and welding steel forming wires onto a perforated base pipe. Such filters are referred to as "wire wrap filters". Another commonly used type of construction for filters in oil and gas extraction is that of wrapping a perforated base pipe with metal screening meshes. These filters are referred to as "metal mesh screens". Both methods provide filters with effective screen apertures of 75 µm to 350 µm. Depending on the type of construction and the planned intended use of both these types of filter, the filtering elements are additionally protected from mechanical damage during transport and introduction into the borehole by an externally fitted, coarse-mesh cage. The disadvantage of these types of filter is that, under the effect of the abrasive particles flowing at high speed, metal structures are subject to rapid abrasive wear, which quickly leads to destruction of the filigree screen structures. Such high-speed abrasive flows often occur in oil and/or gas extraction wells, which leads to considerable technical and financial maintenance expenditure involved in changing the filters. There are even extraction wells which, for reasons of these flows, cannot be controlled by the conventional filtering technique, and therefore cannot be commercially exploited. Conventional metallic filters are subject to abrasive and erosive wear, since steels, even if they are hardened, are softer than the particles in the extraction wells, which sometimes contain quartz.

In order to counter the abrasive flows of sand with abrasion-resistant screen structures, US 8,893,781 B2, US 8,833,447 B2, US 8,662,167 B2 and WO 2016/018821 A1 propose filter structures in which the filter gaps, that is to say the functional openings of the filter, are created by stacking specially formed densely sintered annular discs of a brittle-hard material, preferably of a ceramic material. In this case, spacers are arranged on the upper side of annular discs, distributed over the circumference of the discs.

The filter structures disclosed in US 8,893,781 B2, US 8,833,447 B2, US 8,662,167 B2 and WO 2016/018821 A1 require springs or other elements to avoid widening of the filter gaps. These springs or other elements are usually made from a metallic material such as steel. Under operating conditions, these springs or other elements are exposed to erosive and corrosive environment which is a risk for damage. The springs or other elements made from steel may erode and may get damaged to an extent where the separating device loses its function, resulting in loss of sand control, and production has to be stopped.

Therefore, there is still a need to provide an improved separating device for the removal of solid particles from fluids, in particular from oil, gas and water. Particularly, there is a need to provide a separating device having an improved erosion and corrosion resistance.

As used herein, "a", "an", "the", "at least one" and "one or more" are used interchangeably. The term "comprise" shall include also the terms "consist essentially of" and "consists of".

### Summary

In a first aspect, the present disclosure relates to a separating device for removing solid particles from fluids, comprising
a stack of at least eight annular discs defining a central annular region along a central axis, and
a supporting structure for axial bracing of the central annular region, wherein the supporting structure is located inside the central annular region,
and wherein each annular disc has an upper side and an underside, and wherein the central annular region comprises at least four annular discs of a first type and at least four annular discs of a second type, and wherein each annular disc of the central annular region is an annular disc of the first type or an annular disc of the second type, and wherein the upper side of each annular disc of the first type has two or more spacers which are distributed over the circumference of the upper side of each annular disc of the first type, and wherein the underside of each annular disc of the first type has two or more spacers which are distributed over the circumference of the underside of each annular disc of the first type, and wherein the upper side and the underside of each annular disc of the second type do not comprise any spacers, and wherein the annular discs of the first type and the annular discs of the second type are stacked in an alternating manner in the central annular region, and wherein the spacers of the upper side of each annular disc of the first type contact the underside of the adjacent annular disc of the second type, and wherein the spacers of the underside of each annular disc of the first type contact the upper side of the adjacent annular disc of the second type, and wherein the annular discs are stacked in such a way that a separating gap for the removal of solid particles is present in each case between adjacent annular discs, and wherein each of the two or more spacers of the upper side of each annular disc of the first type is in a position which is in axial direction below the region between two adjacent spacers of the underside of the next annular disc of the first type in the central annular region, and wherein each of the two or more spacers of the underside of each annular disc of the first type is in a position which is in axial direction above the region between two adjacent spacers of the upper side of the next annular disc of the first type in the central annular region,
and wherein the central annular region is compressed.

In another aspect, the present disclosure relates to the use of a separating device as disclosed herein for removing solid particles from fluids
in a process for extracting fluids from extraction wells, or
in water or in storage installations for fluids, or
in a process for extracting ores and minerals.

The separating device as disclosed herein has an improved erosion resistance. The separating device as disclosed herein also has an improved corrosion resistance to the media to be extracted and the media used for maintenance such as acids.

The separating device as disclosed herein does not require springs or other metallic elements to avoid widening of the filter gap.

The separating device as disclosed herein can be used for harsh environments, that is for reservoirs to be exploited with streaks having high inflow and high erosional impact.

### Brief description of the drawings

The present disclosure is explained in more detail on the basis of the drawings, in which
Figure 1 schematically shows the overall view of a separating device as disclosed herein;
Figure 2 shows a cross-sectional view of a separating device as disclosed herein;
Figures 3A - 3H show various details of the central annular region of a separating device as disclosed herein; and
Figures 4A - 4H show various details of the central annular region of a separating device as disclosed herein.

### Detailed Description

Preferred embodiments and details of the separating device of the present disclosure are explained in more detail below with reference to the drawings.

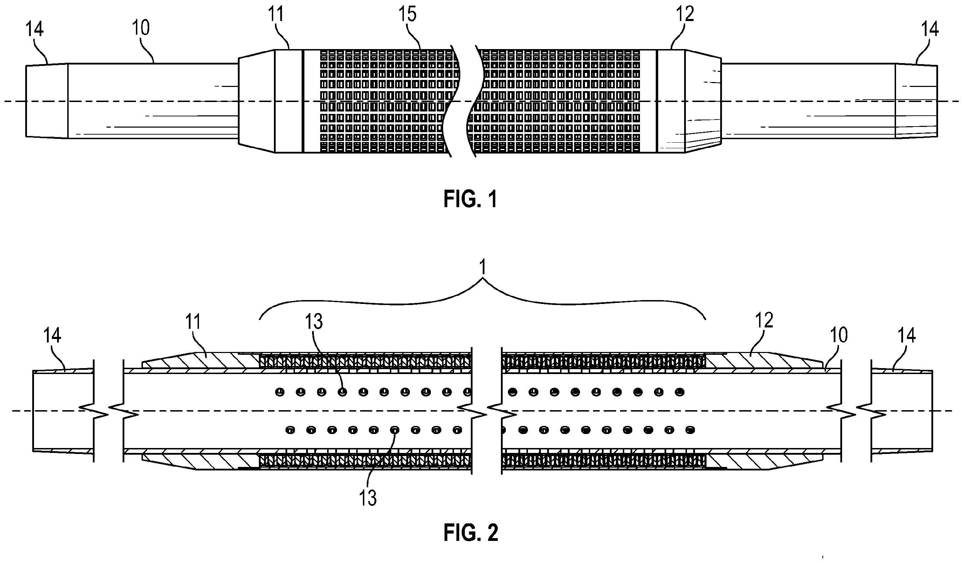

Figure 1 shows the overall view of a separating device according to the present disclosure. Figure 2 shows a cross-sectional view of a separating device according to the present disclosure. The separating device according to the present disclosure comprises a stack of at least eight annular discs defining a central annular region 1 along a central axis. The separating device comprises a supporting structure 10, 11, 12 for axial bracing of the central annular region. The supporting structure may comprise a perforated pipe 10, on which the annular discs are stacked. The perforated pipe 10 with perforations 13 is located inside the central annular region 1 and is also referred to hereinafter as the base pipe. In other embodiments which are not shown in the drawings, the supporting structure of the separating device comprises one or more rods arranged within the central annular region. Usually provided at both ends of the perforated pipe 10 are threads 14, by way of which the separating device can be connected to further components, either to further separating devices or to further components of the extraction equipment.

If the supporting structure of the separating device comprises a perforated pipe, the supporting structure further comprises an end cap 11 at the upper end of the central annular region 1 and an end cap 12 at the lower end of the central annular region 1, the end caps 11, 12 being firmly connected to the base pipe 10.

The separating device may further comprise a tubular shroud 15 (see Figure 1) for protection of the central annular region 1 from mechanical damage. The shroud 15 can be freely passed through by a flow. The shroud 15 protects the central annular region from mechanical damage during handling and fitting into the borehole.

For better understanding, and since the separating device according to the present disclosure is generally introduced into an extraction borehole in vertical alignment, the terms "upper" and "lower" are used here, but the separating device may also be positioned in horizontal orientation in the extraction borehole (in which case, upper typically would refer to the most upstream portion and lower would refer to the most downstream portion of the separating device, when in service).

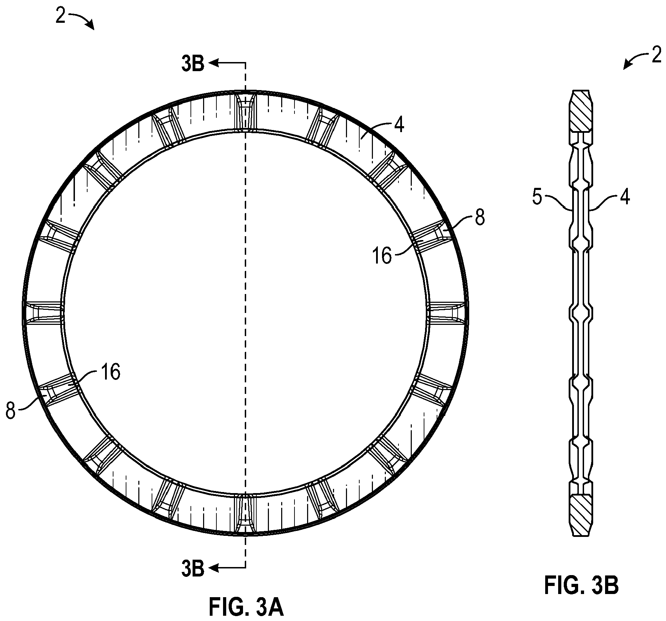

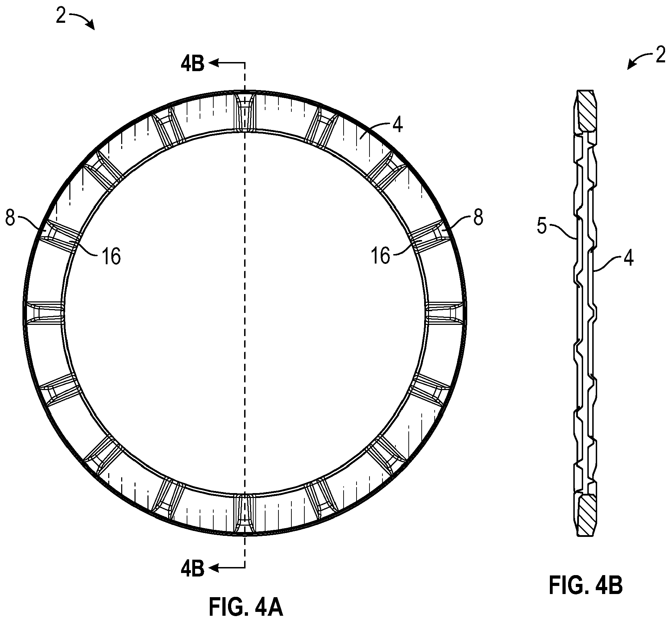

The separating device according to the present disclosure comprises a stack of at least eight annular discs defining a central annular region 1 (see Figures 2, 3D, 4D) along a central axis. The annular discs 2, 3 (see Figures 3A - 3E and 4A - 4E) have an upper side 4, 6 and an underside 5, 7.

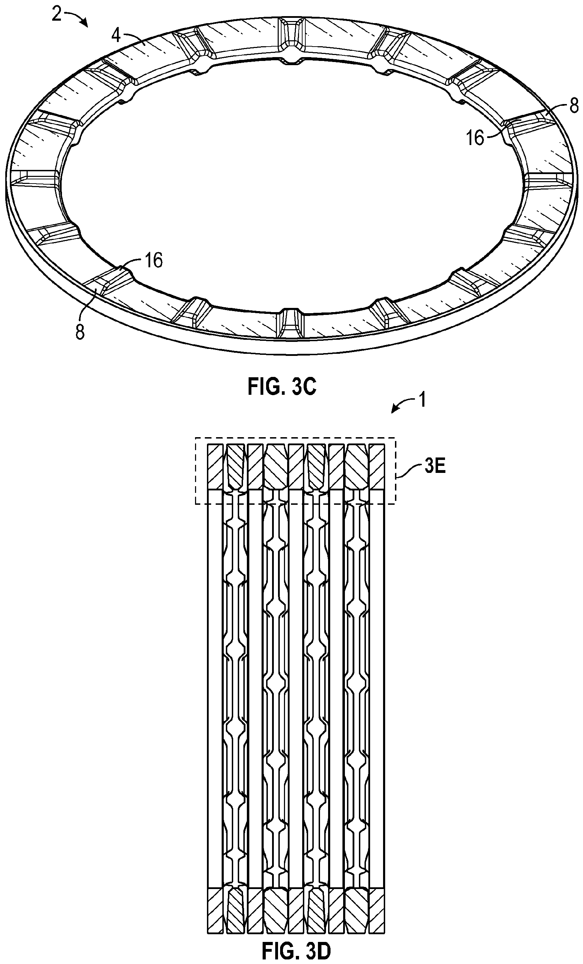

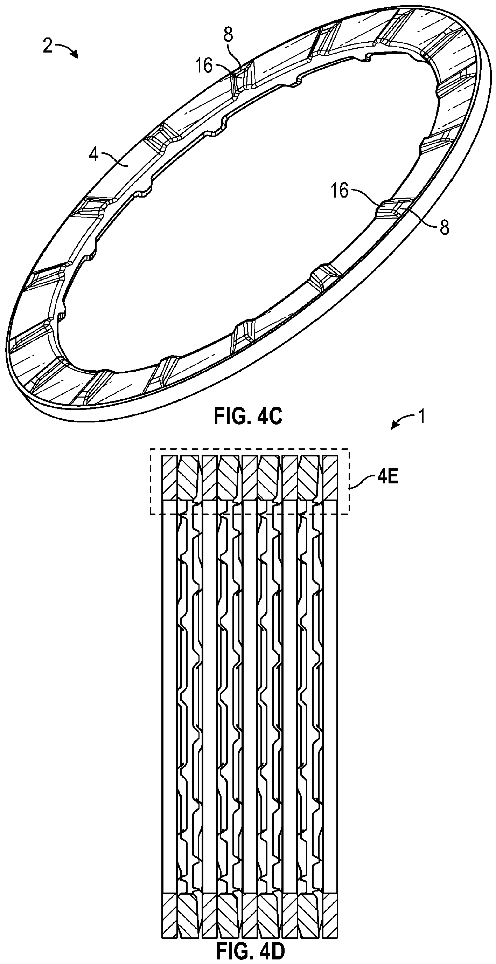

The central annular region 1 comprises at least four annular discs of a first type 2 and at least four annular discs of a second type 3. Each annular disc of the central annular region 1 is an annular disc of the first type 2 or an annular disc of the second type 3 (see Figures 3D - 3F, 4D - 4F). The upper side 4 of each annular disc of the first type 2 has two or more spacers 8 (see Figures 3A - 3C, 4A - 4C) which are distributed over the circumference of the upper side 4 of each annular disc of the first type 2. The underside 5 of each annular disc of the first type 2 has two or more spacers 8 which are distributed over the circumference of the underside 5 of each annular disc of the first type 2 (see Figures 3A - 3C, 4A - 4C). The upper side 6 and the underside 7 of each annular disc of the second type 3 do not comprise any spacers (see Figures 3D - 3E, 4D - 4E). The annular discs of the first type 2 and the annular discs of the second type 3 are stacked in an alternating manner in the central annular region 1 (see Figures 3D, 4D). The spacers 8 of the upper side 4 of each annular disc of the first type 2 contact the underside 7 of the adjacent annular disc of the second type 3, and the spacers 8 of the underside 5 of each annular disc of the first type 2 contact the upper side 6 of the adjacent annular disc of the second type 3. The annular discs 2, 3 are stacked in such a way that a separating gap 9 for the removal of solid particles is present in each case between adjacent annular discs 2, 3 (see Figures 3D - 3E, 4D - 4E).

Each of the two or more spacers 8 of the upper side 4 of each annular disc of the first type 2 is in a position which is in axial direction below the region between two adjacent spacers 8 of the underside 5 of the next annular disc of the first type 2 in the central annular region 1. Each of the two or more spacers 8 of the underside 5 of each annular disc of the first type 2 is in a position which is in axial direction above the region between two adjacent spacers 8 of the upper side 4 of the next annular disc of the first type 2 in the central annular region 1 (see Figures 3D - 3F, 4D - 4F).

The upper side 4 and the underside 5 of each annular disc of the first type 2 each may have only two spacers 8. Typically, the upper side 4 and the underside 5 of each annular disc of the first type 2 each has three or more spacers 8 which are distributed over the circumference of the upper side 4 and the underside 5 of the annular discs of the first type 2.

The contact area 16 of the spacers 8 of the upper side 4 and of the underside 5 of each annular disc of the first type 2 may be planar, so that the spacers 8 have a planar contact area with the adjacent annular disc (see Figures 3D, 4D). The planar contact area 16 of the spacers 8 of the upper side 4 of an annular disc of the first type 2 is in contact with the underside 7 of the adjacent annular disc of the second type 3, and the planar contact area 16 of the spacers 8 of the underside 5 of an annular disc of the first type is in contact with the upper side 6 of the adjacent annular disc of the second type 3.

The central annular region 1 is compressed. The central annular region is compressed during assembly of the separating device.

Each annular disc 2, 3 preferably comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

These materials are erosion resistant to abrasive fluid flows and also corrosion resistant to the media to be extracted and the media used for maintenance such as acids.

In some embodiments of the separating device disclosed herein the supporting structure for axial bracing of the central annular region 1 comprises a perforated pipe 10 located in the central annular region 1 and two end caps 11, 12 (see Figures 1 and 2) at the upper and lower ends of the central annular region 1.

The perforated pipe or base pipe is co-centric with the central annular region. The base pipe is perforated, i.e. provided with holes, in the region of the central annular region; it is not perforated outside the region of the central annular region. The perforation 13 serves the purpose of directing the filtered fluid, i.e. the fluid flow freed of the solid particles, such as for example gas, oil or mixtures thereof, into the interior of the base pipe, from where it can be transported or pumped away.

Threads 14 are usually cut at both ends of the base pipe 10 and can be used for screwing the base pipes together into long strings.

The base pipe can consist of a metallic material, a polymer or ceramic material. Typically, the base pipe consists of a metallic material. The metallic material may be steel, for example steel L80. Steel L80 refers to steel that has a yield strength of 80 000 psi (corresponding to about 550 MPa). As an alternative to steel L80, steels that are referred to in the oil and gas industry as J55, N80, C90, T95, P110 and L80Cr13 (see Drilling Data Handbook, 8th Edition, IFP Publications, Editions Technip, Paris, France) may also be used. Other steels, in particular corrosion-resistant alloy and high-alloy steels, may also be used as the material for the base pipe. For special applications in corrosive conditions, base pipes of nickel-based alloys or Duplex stainless steels may also be used. It is also possible to use aluminum materials as the material for the base pipe, in order to save weight. Furthermore, base pipes of titanium or titanium alloys may also be used.

The inside diameter of the annular discs must be greater than the outside diameter of the base pipe. This is necessary on account of the differences with regard to the thermal expansion between the metallic base pipe and the material from which the annular discs are made and also for technical reasons relating to flow. It has been found to be favorable in this respect that the inside diameter of the annular discs is at least 0.5 mm and at most 10 mm greater than the outside diameter of the base pipe. In particular embodiments, the inside diameter of the annular discs is at least 1.5 mm and at most 5 mm greater than the outside diameter of the base pipe.

The outside diameter of the base pipe is typically from 2.54 cm to 25.4 cm (1 inch to 10 inches).

The end caps 11, 12 are co-centric with the perforated pipe 10. The end caps are produced from metal, usually steel and typically from the same material as the base pipe. The end caps 11, 12 may be firmly connected to the base pipe 10. The end caps may be fastened to the base pipe by means of welding, clamping, riveting or screwing. During assembly, the end caps are pushed onto the base pipe after the central annular region and are subsequently fastened on the base pipe. In the embodiment of the separating device as disclosed herein that is shown in Figures 1 and 2, the end caps are fastened by means of welding.

Of course, as described herein, "co-centric", "planar", "plane-parallel" and "at right angles" (and similar terms) mean substantially so, within, for instance, relevant manufacturing, assembly and/or operational tolerances.

When deploying a separating device as disclosed herein in a well, it will in most cases experience an increase in temperature depending on the deployment depth and the region geology. Typical operating temperatures for a separating device are up to 300 °C. As the supporting structure and the central annular region are made from different materials with different thermal expansion behavior, there will be different thermal expansions for the supporting structure and the central annular region. The compression of the central annular region needs to be at least as high as the mismatch in thermal expansion between the supporting structure and the central annular region to maintain close contact of the individual annular discs.

In embodiments comprising a supporting structure comprising a perforated pipe and two end caps, the central annular region of the separating device may be compressed by a force sufficient to reduce the total length of the central annular region by a length equal to or greater than the difference in thermal expansion between the central annular region and the perforated pipe in the temperature range of 20 °C to operating temperature. The operating temperature typically is above 20 °C and up to 300 °C.

The central annular region can be compressed by applying an axial load. By compressing the central annular region, the annular discs of the second type are elastically deformed by the spacers of the adjacent annular discs of the first type.

The central annular region is compressed not only to ensure the contact of each annular disc with its adjacent annular discs, but in addition more pressure is applied to create elastic deformation of the annular discs, for thermal compensation of the difference in thermal expansion between the central annular region and the perforated pipe in the temperature range from 20 °C to operating temperature of the separating device downhole.

The compressed central annular region decompresses at least partially at operating temperature of the separating device, thereby compensating the differences in thermal expansion of the central annular region and the perforated pipe.

In some embodiments of the separating device disclosed herein which are not shown in the drawings, the supporting structure for axial bracing of the central annular region 1 comprises one or more rods arranged within the central annular region. The central annular region of the separating device of these embodiments may be compressed by a force sufficient to reduce the total length of the central annular region by a length equal to or greater than the difference in thermal expansion between the central annular region and the one or more rods in the temperature range of 20 °C to operating temperature. The operating temperature typically is above 20 °C and up to 300 °C.

The central annular region can be compressed by applying an axial load. By compressing the central annular region, the annular discs of the second type are elastically deformed by the spacers of the adjacent annular discs of the first type.

The central annular region is compressed not only to ensure the contact of each annular disc with its adjacent annular discs, but in addition more pressure is applied to create elastic deformation of the annular discs, for thermal compensation of the difference in thermal expansion between the central annular region and the perforated pipe in the temperature range from 20 °C to operating temperature of the separating device downhole.

The compressed central annular region decompresses at least partially at operating temperature of the separating device, thereby compensating the differences in thermal expansion of the central annular region and the one or more rods.

The one or more rods can consist of a metallic material, a polymer or ceramic material. The metallic material may be steel. Typically, a metallic material is used.

In some embodiments of the separating device disclosed herein, the separating device does not comprise a separate element having the function of a thermal compensator as in US 8,893,781 B2, US 8,833,447 B2, US 8,662,167 B2 and WO 2016/018821 A1, such as springs or other elements, to compensate for the difference in thermal expansion between the central annular region and the supporting structure, i.e. the difference in thermal expansion between the central annular region and the base pipe, or the difference in thermal expansion between the central annular region and the one or more rods. A thermal compensator may not be required for the separating device as disclosed herein, as the difference in thermal expansion between the central annular region and the supporting structure can be compensated as the central annular region is compressed by a length equal to or greater than the difference in thermal expansion between the central annular region and the supporting structure, i.e. the difference in thermal expansion between the central annular region and the perforated pipe, or the difference in thermal expansion between the central annular region and the one or more rods, in the temperature range of 20 °C and operating temperature.

The compressed central annular region decompresses at least partially at operating temperature of the separating device, thereby compensating the differences in thermal expansion of the central annular region and the one or more rods.

In the separating device disclosed herein, the central annular region, besides the main function of filtering a fluid, i.e. removing solid particles from a fluid, has the additional function of a thermal compensator to compensate for the difference in thermal expansion between the central annular region and the supporting structure.

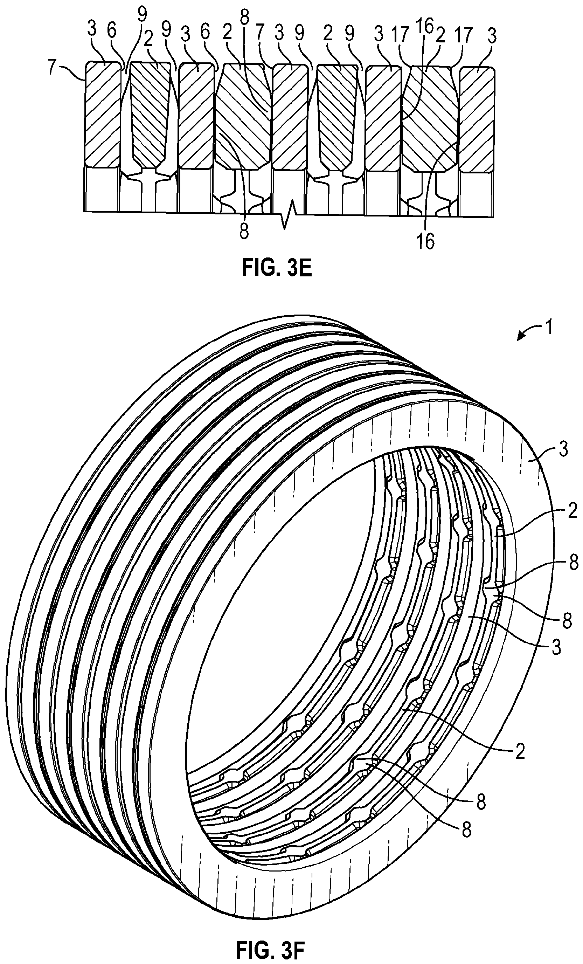

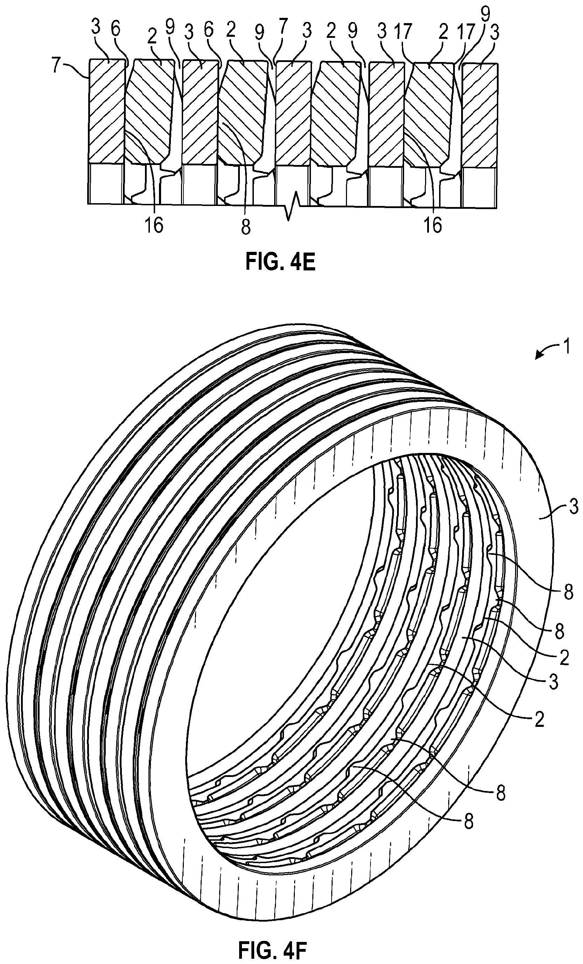

As can be seen from Figures 3D, 3F, 4D and 4F, the two or more spacers 8 of the upper side 4 of each annular disc of the first type 2 are in a position aligned one above another with the two or more spacers 8 of the upper side 4 of the annular disc of the first type 2 which is stacked after the next annular disc of the first type 2 in the central annular region. The two or more spacers 8 of the underside 5 of each annular disc of the first type 2 are in a position aligned one above another with the two or more spacers 8 of the underside 5 of the annular disc of the first type 2 which is stacked after the next annular disc of the first type 2 in the central annular region.

Typically, the two or more spacers 8 of the upper side 4 and of the underside 5 of each annular disc of the first type 2 are distributed homogeneously along the circumference of the annular disc so that there is an equal distance between each pair of two adjacent spacers (see Figures 3A, 4A).

In some embodiments of the separating device as disclosed herein, the two or more spacers 8 of the upper side 4 and of the underside 5 of each annular disc of the first type 2 may also be distributed non-uniformly along the circumference of the annular disc so that there is not an equal distance between each pair of two adjacent spacers. This may be useful in applications where the inflow of fluid loaded with sand and minerals is non-uniformly distributed along the circular circumference of the separating device, as the inflow characteristics of the separating device can be adapted to the non-uniformly inflow of fluid. For example, if the separating device is used in a reservoir where most of the inflow is coming from a specific direction, the inflow characteristics of the separating device can be adapted to the inflow coming from this direction by a corresponding non-uniformly distribution of the spacers along the circumference of the annular disc.

In some embodiments of the separating device as disclosed herein, each of the two or more spacers 8 of the upper side 4 of each annular disc of the first type 2 is in a position aligned opposite to a spacer of the underside 5 of the respective annular disc (see Figures 3B, 3C).

In some embodiments of the separating device as disclosed herein, each of the two or more spacers 8 of the upper side 4 of each annular disc of the first type 2 is in a position opposite to a position between two adjacent spacers of the underside 5 of the respective annular disc. In these embodiments, the two or more spacers 8 of the upper side 4 of each annular disc of the first type 2 preferably are in a position aligned one above another with the two or more spacers 8 of the upper side 4 of the next annular disc of the first type 2 in the central annular region, and also the two or more spacers 8 of the underside 5 of each annular disc of the first type 2 preferably are in a position aligned one above another with the two or more spacers 8 of the underside 5 of the next annular disc of the first type 2 in the central annular region.

In some embodiments of the separating device as disclosed herein, each of the two or more spacers 8 of the upper side 4 of each annular disc of the first type 2 is in a position opposite to the middle position between two adjacent spacers of the underside 5 of the respective annular disc (see Figures 4B, 4C). In these embodiments, the two or more spacers 8 of the upper side 4 of each annular disc of the first type 2 preferably are in a position aligned one above another with the two or more spacers 8 of the upper side 4 of the next annular disc of the first type 2 in the central annular region, and also the two or more spacers 8 of the underside 5 of each annular disc of the first type 2 preferably are in a position aligned one above another with the two or more spacers 8 of the underside 5 of the next annular disc of the first type 2 in the central annular region.

In the separating device as disclosed herein, each of the two or more spacers 8 of the upper side 4 of each annular disc of the first type 2 preferably is in a position which is in axial direction below the middle position of the region between two adjacent spacers of the underside 5 of the next annular disc of the first type 2 in the central annular region 1, and each of the two or more spacers of the underside 5 of each annular disc of the first type 2 preferably is in a position which is in axial direction above the middle position of the region between two adjacent spacers of the upper side 4 of the next annular disc of the first type 2 in the central annular region 1.

The annular discs 2, 3 may have an axial thickness of 1 to 12 mm. Preferably, the axial thickness of the annular discs of the first type 2 is larger than the axial thickness of the annular discs of the second type 3. For example, the axial thickness of the annular discs of the first type 2 may be 12 mm and the axial thickness of the annular discs of the second type 3 may be 7 mm. Typically, the thickness of the annular discs of the first type 2 is from 3 to 12 mm and the thickness of the annular discs of the second type 3 is from 1 to 7 mm. The axial thickness or height of the annular discs 2 of the first type of annular discs is measured in the region of the spacers 8. With the reduced axial thickness of the annular discs 3 which do not comprise any spacers, the open flow area can be increased.

The axial thickness or height of the annular discs 3 of the second type of annular discs can be measured at any position as the height is constant over the circumference of the annular discs. The base thickness of the annular discs of the first type 2 is measured in the region between the spacers 8 and, in the case of a trapezoidal cross-section, on the thicker side in the region between the spacers. The axial thickness or height of the annular discs 2 is measured including the spacers 8 and corresponds to the sum of the base thickness and the filter width.

The height of the spacers 8 determines the filter width of the separating device, that is to say the height of the separating gap between the individual annular discs. The filter width additionally determines which particle sizes of the solid particles to be removed, such as for example sand and rock particles, are allowed to pass through by the separating device and which particle sizes are not allowed to pass through. The height of the spacers is specifically set in the production of the annular discs.

The height of the separating gap, i.e. the filter width, may be from 50 to 1000 µm. The height of the separating gap is measured at the position of the smallest distance between two adjacent annular discs.

The ratio of the axial thickness of the annular discs of the first type to the axial thickness of the annular discs of the second type may be at least 1.1. In some embodiments, the ratio of the axial thickness of the annular discs of the first type to the axial thickness of the annular discs of the second type may be at least 1.3 or at least 1.5.

The upper side 4 and the underside 5 of each annular disc of the first type 2 may have an elevation at the separating gap. The elevation is not shown in the drawings. The elevation is along the circumference of the annular disc of the first type 2. The elevation at the separating gap, on the upper side 4 and on the underside 5 of each annular disc of the first type 2, may comprise an area having a flat surface. The area with a flat surface at the separating gap may be manufactured by machining, for example by grinding or lapping processes.

The upper side 6 and the underside 7 of each annular disc of the second type 3 which does not comprise any spacers may have a recess at the separating gap 9. The recess is not shown in the drawings. The recess is along the circumference of the annular disc of the first type 2. The recess at the separating gap, on the upper side 6 and on the underside 7 of each annular disc of the second type 3, may comprise an area having a flat surface. The area with a flat surface at the separating gap may be manufactured by machining, for example by grinding or lapping processes.

By the elevation at the separating gap with the area with a flat surface, and by the recess at the separating gap with the area with a flat surface, the tolerance of the height of the separating gap, i.e. the tolerance of the height of the filter width, may be improved. The tolerance of the height of the separating gap is the deviation of an individual height of the separating gap between two individual discs from the average height of the separating gap. The average height of the separating gap is the mean value of all individual heights of the separating gap when measured between each pair of adjacent annular discs within the stack of annular discs, wherein this measurement is carried out along a line on the lateral surface of the stack of annular discs parallel to the central axis.

In some embodiments, the supporting structure of the separating device as disclosed herein comprises a perforated pipe and may further comprise one or more bands (not shown in the drawings) which are provided on the lateral surface of the perforated pipe 10 and which are inside the central annular region 1. The annular discs are placed around the one or more bands, whereby the annular discs are centered by the one or more bands on the perforated pipe. The one or more bands are also referred to as centering bands.

The one or more bands or centering bands may be provided axially parallelly on the lateral surface of the perforated pipe. The centering bands may also be provided helically in axial direction on the lateral surface of the perforated pipe. The centering bands may be provided uniformly spaced apart or with different distances from one another.

The length of the centering bands corresponds at least to the length of the annular stack, which ensures that all of the annular discs of the annular stack including the first and last annular disc are centered.

The centering bands may have elastic properties in a direction perpendicular to the central axis of the central annular region. Due to the elastic properties, the centering bands are elastically deformable in radial direction.

The centering bands may have a planar configuration. The centering bands may also have a profiled configuration in axial direction of the bands.

If the centering bands have a profiled configuration, the profiled configuration may be a curvature having an outwardly curved side. The outwardly curved side of the curvature may be oriented towards the perforated pipe, i.e. inwards, or towards the central annular region, i.e. outwards. Preferably, the outwardly curved side of the curvature is oriented towards the central annular region, i.e. outwards.

The material of the centering bands should preferably be chosen such that it does not corrode under operating conditions and it must be oil- water- and temperature-resistant. Metal or plastic is suitable as the material for the centering bands, preferably metal alloys on the basis of iron, nickel and cobalt, more preferably steel, more preferably spring strip steel. For example, spring strip steel with the material number 1.4310, of a spring-hard configuration, may be used as the material for the centering bands. The width of the centering bands may be for example 2 to 30 mm and the thickness may be for example 0.1 to 0.5 mm.

If steel is used as the material for the centering bands, it must be ensured when selecting the material that undesired electrochemical reactions do not occur on contact with other metallic structural elements of the separating device.

In some embodiments, the centering bands are fixed on the outer surface of the perforated pipe. The centering bands may be fixed onto the outer surface of the perforated pipe by welding, brazing or gluing.

In some embodiments, the centering bands are not permanently fixed on the outer surface of the perforated pipe.

The thickness and width of the centering bands should be chosen such that the annular discs can be axially displaced on the base pipe with a "sliding fit". This means that, in the vertical position, the annular discs are not axially displaced under their own weight. This is generally the case if the force for displacing the annular discs on the base pipe in the horizontal direction, that is to say without the influence of gravitational force, lies between 0.1 N and 10 N, preferably between 0.5 N and 5 N.

Each annular disc 2, 3 of the separating device as disclosed herein comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

In some embodiments, the annular discs 2, 3 are produced from, i.e. consist of a material which is independently selected from the group consisting of (i) ceramic materials; (ii) mixed materials having fractions of ceramic or metallic hard materials and a metallic binding phase; and (iii) powder metallurgical materials with hard material phases formed in-situ.

These materials are typically chosen based upon their relative abrasion- and erosion-resistance to solid particles such as sands and other mineral particles and also corrosion-resistance to the extraction media and the media used for maintenance, such as for example acids.

The material which the annular discs comprise can be independently selected from this group of materials, which means that each annular disc could be made from a different material. But for simplicity of design and manufacturing, of course, all annular discs of the separating device could be made from the same material.

The ceramic materials which the annular discs can comprise or from which the annular discs are made can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fiber-reinforced ceramic materials.

Examples of oxidic ceramic materials are materials chosen from Al₂O₃, ZrO₂, mullite, spinel and mixed oxides. Examples of non-oxidic ceramic materials are SiC, B₄C, TiB₂ and Si₃N₄. Ceramic hard materials are, for example, carbides and borides. Examples of mixed materials with a metallic binding phase are WC-Co, TiC-Fe and TiB2-FeNiCr. Examples of hard material phases formed in situ are chromium carbides. An example of fiber-reinforced ceramic materials is C/SiC. The material group of fiber-reinforced ceramic materials has the advantage that it leads to still greater internal and external pressure resistance of the separating devices on account of its greater strength in comparison with monolithic ceramic.

The aforementioned materials are distinguished by being harder than the typically occurring hard particles, such as for example sand and rock particles, that is to say the HV (Vickers) or HRC (Rockwell method C) hardness values of these materials lie above the corresponding values of the surrounding rock. Materials suitable for the annular discs of the separating device according to the present disclosure have HV hardness values greater than 11 GPa, or even greater than 20 GPa.

All these materials are at the same time distinguished by having greater brittleness than typical unhardened steel alloys. In this sense, these materials are referred to herein as "brittle-hard".

Materials suitable for the annular discs of the separating device according to the present disclosure have moduli of elasticity greater than 200 GPa, or even greater than 350 GPa.

Materials with a density of at least 90%, more specifically at least 95%, of the theoretical density may be used, in order to achieve the highest possible hardness values and high abrasion and erosion resistances. Sintered silicon carbide (SSiC) or boron carbide may be used as the material for the annular discs. These materials are not only abrasion-resistant but also corrosion-resistant to the treatment fluids usually used for flushing out the separating device and stimulating the borehole, such as acids, for example HCI, bases, for example NaOH, or else steam.

Particularly suitable are, for example, SSiC materials with a fine-grained microstructure (mean grain size ≤ 5 µm), such as those sold for example under the names 3M^{™} silicon carbide type F and 3M^{™} silicon carbide type F plus from 3M Technical Ceramics, Kempten, Germany. Furthermore, however, coarse-grained SSiC materials may also be used, for example with a bimodal microstructure. In one embodiment, 50 to 90% by volume of the grain size distribution consisting of prismatic, platelet-shaped SiC crystallites of a length of from 100 to 1500 µm and 10 to 50% by volume consisting of prismatic, platelet-shaped SiC crystallites of a length of from 5 to less than 100 µm (3M^{™} silicon carbide type C from 3M Technical Ceramics, Kempten, Germany).

Apart from these single-phase sintered SSiC materials, liquid-phase-sintered silicon carbide (LPS-SiC) can also be used as the material for the annular discs. An example of such a material is 3M^{™} silicon carbide type T from 3M Technical Ceramics, Kempten, Germany. In the case of LPS-SiC, a mixture of silicon carbide and metal oxides is used as the starting material. LPS-SiC has a higher bending resistance and greater toughness, measured as a Klc value, than single-phase sintered silicon carbide (SSiC).

In some embodiments, the material of each annular disc 2, 3 is sintered silicon carbide (SSiC).

To protect the brittle-hard annular discs from mechanical damage during handling and fitting into the borehole, the separating device may be surrounded by a tubular shroud 15 (see Figure 1) that can be freely passed through by a flow.

This shroud may be configured for example as a coarse-mesh screen and preferably as a perforated plate. The shroud may be produced from a metallic material, such as from steel, particularly from corrosion-resistant steel. The shroud may be produced from the same material as that used for producing the base pipe.

The shroud can be held on both sides by the end caps, it may also be firmly connected to the end caps. This fixing is possible for example by way of adhesive bonding, screwing or pinning, the shroud may be welded to the end caps after assembly.

The inner diameter of the shroud must be greater than the outer diameter of the annular discs. For mechanical protection of the annular discs of the central annular region, the inner diameter of the shroud should be at least 0.5 mm larger than the outer diameter of the central annular region. Typically, the inner diameter of the shroud is at most 15 mm larger than the outer diameter of the central annular region. The radial distance between shroud and central annular region can be selected depending on the radial thickness of the shroud and on the radial loads that need to be withstand. The radial thickness of the shroud usually is from 1 to 20 mm, preferably 1 to 8 mm.

The inner diameter of the shroud being greater than the outer diameter of the annular discs is also necessary for technical reasons relating to flow. It has been found to be favorable in this respect that the inner diameter of the shroud is at least 0.5 mm and at most 15 mm greater than the outer diameter of the annular discs. The inner diameter of the shroud may be at least 1.5 mm and at most 8 mm greater than the outer diameter of the annular discs.

The central annular region of the separating device disclosed herein can, and typically does, comprise more than 3 annular discs. The number of annular discs in the central annular region can be from 3 to 500, but also larger numbers of annular discs are possible. For example, the central annular region can comprise 50, 100, 250 or 500 annular discs.

The inner and outer circumference of the annular discs typically have a circular shape. The inner and/or outer circumference of the annular discs may also deviate from the circular shape. For example, the inner and/or outer circumference of the annular discs may have the shape of a polygon.

Every upper side 4 of an annular disc of the first type 2 which has two or more spacers may be inwardly or outwardly sloping, preferably inwardly sloping, in the regions between the spacers (see Figures 3C, 3E, 4C, 4E), and every underside 5 of an annular disc 2 of the first type which has two or more spacers may be inwardly or outwardly sloping, preferably inwardly sloping, in the regions between the spacers (see Figures 3E, 4E). Thereby a separating gap is formed that diverges in the direction of flow. The forming of a separating gap that diverges in the direction of flow, has the advantage that, after passing the narrowest point of the filter gap, irregularly shaped particles, i.e. non-spherical particles, tend much less to get stuck in the filter gap, for example due to rotation of the particles as a result of the flow in the gap. Consequently, a separating device with a divergent filter gap formed in such a way is less likely to become plugged and clogged than a separating device in which the separating gaps have a filter opening that is constant over the ring cross-section.

Every upper side 6 of each annular disc 3 of the second type of annular discs which does not comprise any spacers may be formed at right angles to the central axis, and every underside 7 of an annular disc 3 of the second type of annular discs which does not comprise any spacers may be formed at right angles to the central axis (see Figures 3D -3E, 4D - 4E).

The outer contours of the annular discs may be configured with a bevel 17, as illustrated in Figures 3E and 4E. It is also possible to configure the annular discs with rounded edges. This may, for some applications, represent even better protection of the edges (versus straight edged) from the edge loading that is critical for the materials from which the annular discs are produced.

The circumferential surfaces (lateral surfaces) of the annular discs may be cylindrical. However, it is also possible to form the circumferential surfaces as outwardly convex, in order to achieve a better incident flow.

In practice, it is expected that the annular discs are produced with an outer diameter that is adapted to the borehole of the extraction well provided in the application concerned, so that the separating device according to the present disclosure can be introduced into the borehole with little play, in order to make best possible use of the cross-section of the extraction well for achieving a high delivery output. The outer diameter of the annular discs may be 20 - 250 mm, but outer diameters greater than 250 mm are also possible, as the application demands.

The radial ring width of the annular discs may lie in the range of 8 - 20 mm. These ring widths are suitable for separating devices with base pipe diameters in the range of 6 cm to 14 cm (2³/₈ to 5½ inches).

The spacers 8 make a radial throughflow possible and therefore may be arranged radially aligned on the upper side 4, or on the underside 5 of the annular discs of the first type 2, respectively. The spacers may, however, also be aligned at an angle to the radial direction.

The transitions between the surface of the annular discs, i.e. the upper side 4 and the underside 5 of the annular discs of the first type 2, and the spacers 8 are typically not formed in a step-shaped or sharp-edged manner. Rather, the transitions between the surface of the annular discs and the spacers are typically configured appropriately for the material from which the annular discs are made, i.e. the transitions are made with radii that are gently rounded (see Figures 3C and 4C).

The contact area of the spacers, that is to say the planar area with which the spacers are in contact with the adjacent annular disc are not particularly limited, and may be, for instance, rectangular, round, rhomboidal, elliptical, trapezoidal or else triangular, while the shaping of the corners and edges should always be appropriate for the material from which the annular discs are made, e.g. rounded.

Depending on the size of the annular discs, the contact area 16 of the individual spacers is typically between 4 and 100 mm².

The number of spacers 8 on each upper side 4 and on each underside 5 of the annular discs of the first type 2 may be even or odd. Preferably more than three spacers are provided, more preferably at least 6, even more preferably at least 10, and particularly preferably at least 15. The larger the annular discs are, the more spacers should be provided in the construction, as a rule. The distance between each pair of adjacent spacers can be selected depending on the application case or the pressure ratios to be expected and depending on the mechanical properties of the material used for the annular discs. The higher the pressures to be expected in operation are, the lower should be the distance between each pair of adjacent spacers. Typically, the distance between each pair of adjacent spacers is from 25 to 50 mm or 30 to 40 mm.

The annular discs of the separating device disclosed herein may be prepared by the methods that are customary in technical ceramics or powder metallurgy, that is to say by die pressing of pressable starting powders and subsequent sintering. The annular discs may be formed on mechanical or hydraulic presses in accordance with the principles of "near-net shaping", debindered and subsequently sintered to densities > 90% of the theoretical density. The annular discs may be subjected to 2-sided facing on their upper side and underside.

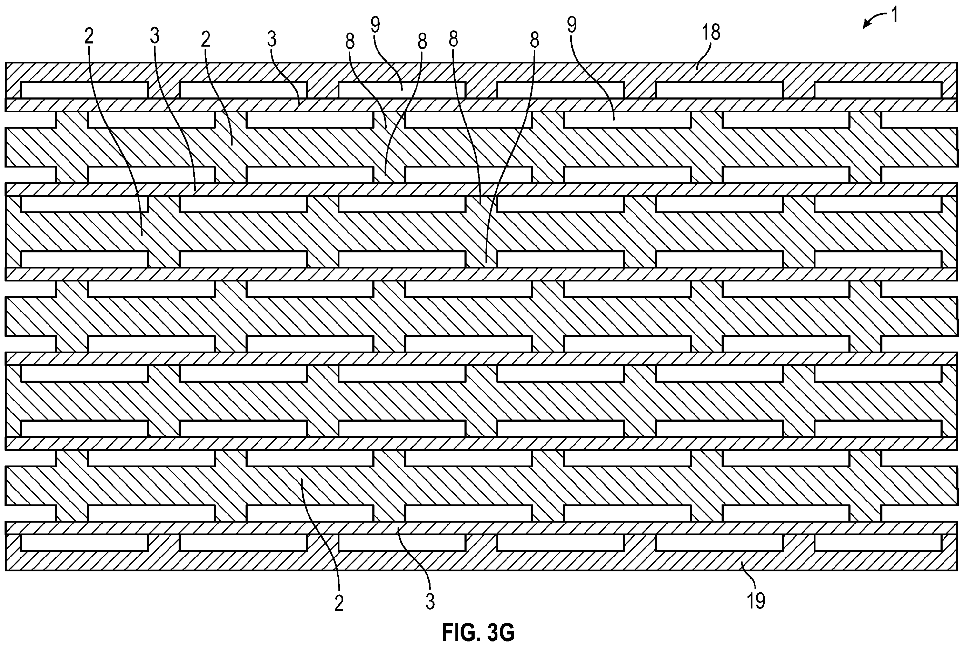

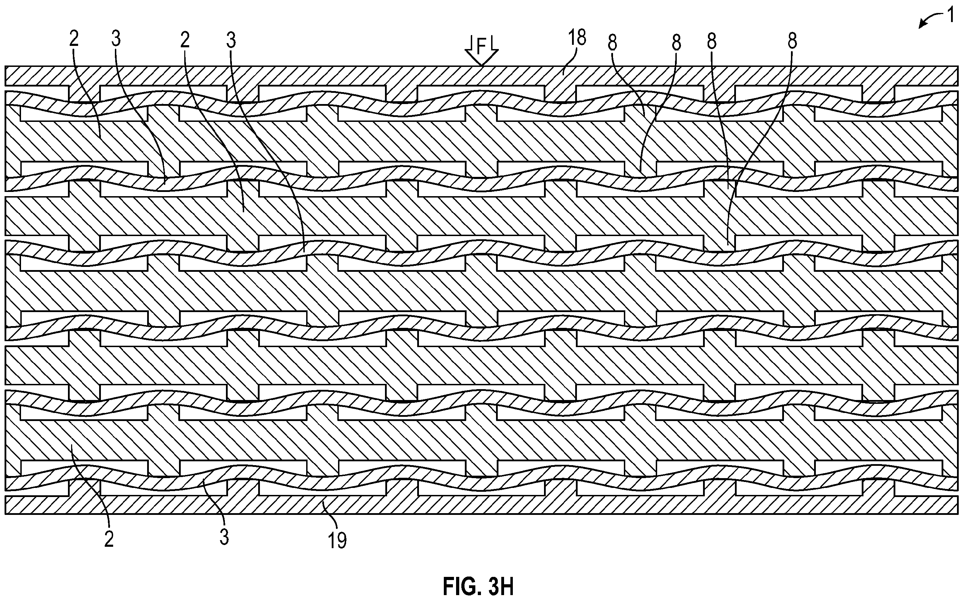

In Figures 3A - 3H one embodiment of a central annular region of a separating device as disclosed herein is represented. Figures 3A - 3C show various views of an individual annular disc of the first type 2. Figures 3D - 3H show the central annular region 1 constructed from annular discs of the first type 2 of Figures 3A - 3C and from annular discs of the second type 3, representing various views and details of the stack of annular discs. Figure 3A shows a plan view of the upper side 4 of an annular disc of the first type 2, Figure 3B shows a cross-sectional view along the sectional line denoted in Figure 3A by "3B". Figure 3C shows a 3D view of the annular disc of the first type 2. Figure 3D shows a cross-sectional view of the central annular region 1 constructed from annular discs of the first type 2 of Figures 3A - 3C and from annular discs of the second type 3. Figure 3E shows an enlarged detail of the cross-sectional view of Figure 3D. Figure 3F shows a 3D view of the central annular region 1. Figures 3G and 3H show a representation of the outer circumferential surface of the central annular region 1, where the outer circumferential surface has been unrolled to a 2D representation. In the 2D representation, it is easier to see how the annular discs are stacked in the central annular region. Figure 3G shows the outer circumferential surface of the central annular region as stacked and before the central annular region has been compressed, Figure 3H shows the outer circumferential surface of the central annular region after compression. At the upper and lower ends of the central annular region 1, annular discs 18 and 19 may be stacked which have spacers only on one side, i.e. for annular disc 18 at the upper end of the central annular region only on the underside, and for annular disc 19 at the lower end of the central annular region only on the upper side. The spacers of annular discs 18 and 19 are directed towards the adjacent annular discs 3 of the central annular region 1. The other side of the annular discs 18 and 19 has a plane surface formed at right angles to the central axis.

The removal of the solid particles takes place at the inlet opening of a separating gap 9, which may be divergent, i.e. opening, in the direction of flow (see Figures 3D and 3E) and is formed between an annular disc of the first type 2 and an annular disc of the second type 3 lying one over the other in the central annular region 1. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The upper side 4 of each annular disc of the first type 2 has sixteen spacers 8 distributed over its circumference (Figure 3A). The underside 5 of each annular disc of the first type 2 also has sixteen spacers 8 distributed over its circumference. In the embodiment which is shown in Figures 3A - 3H, the upper side 4 of each annular disc of the first type 2 corresponds to the underside 5 of each annular disc of the first type 2. The sixteen spacers 8 of the upper side 4 and of the underside 5 of each annular disc of the first type 2 are distributed homogeneously along the circumference of the annular disc so that there is an equal distance between each pair of two adjacent spacers. Each of the sixteen spacers 8 of the upper side 4 of each annular disc of the first type 2 is in a position aligned opposite to a spacer 8 of the underside 5 of the respective annular disc (see Figure 3C).

The spacers 8 are of a defined height, with the aid of which the height of the separating gap 9 (gap width of the filter gap, filter width) is set. The spacers 8 are not separately applied or subsequently welded-on spacers, they are formed directly in production, during the shaping of the annular discs.

The contact area 16 of the spacers 8 is planar (see Figures 3C, 3E), so that the spacers 8 have a planar contact area with the adjacent annular disc. The spacers 8 of the upper side 4 of each annular disc of the first type 2 have a planar contact area with the underside 7 of the adjacent annular disc of the second type 3, and the spacers 8 of the underside 5 of each annular disc of the first type 2 have a planar contact area with the upper side 6 of the adjacent annular disc of the second type 3.

The upper side 4 of the annular discs of the first type 2 having sixteen spacers 8 is inwardly sloping, in the regions between the spacers. The underside 5 of the annular discs of the first type 2 having sixteen spacers 8 is also inwardly sloping, in the regions between the spacers. The ring cross-section of the annular discs of the first type 2 in the portions between the spacers is trapezoidal (see Figures 3D, 3E), the thicker side of the ring cross-section lying on the outside, i.e. on the inlet side of the flow to be filtered.

The upper side 6 and the underside 7 of the annular discs of the second type 3 do not comprise any spacers. The upper side 6 and the underside 7 of the annular discs of the second type 3 is formed as smooth and planar and at right angles to the disc axis and the central axis of the central annular region.

The annular discs of the first type 2 and the annular discs of the second type 3 are stacked in an alternating manner in the central annular region 1 (see Figures 3D - 3H).

The annular discs 2, 3 are stacked in such a way that a separating gap 9 for the removal of solid particles is present in each case between adjacent annular discs 2, 3 (see Figures 3D, 3E).

Each of the sixteen spacers 8 of the upper side 4 of each annular disc of the first type 2 is in a position which is in axial direction below the region between two adjacent spacers 8 of the underside 5 of the next annular disc of the first type 2 in the central annular region 1, and each of the sixteen spacers 8 of the underside 5 of each annular disc of the first type 2 is in a position which is in axial direction above the region between two adjacent spacers 8 of the upper side 4 of the next annular disc of the first type 2 in the central annular region 1 (see Figure 3F - 3H).

Each of the sixteen spacers 8 of the upper side 4 of each annular disc of the first type 2 is in a position which is in axial direction below the middle position of the region between two adjacent spacers of the underside 5 of the next annular disc of the first type 2 in the central annular region 1, and each of the sixteen spacers of the underside 5 of each annular disc of the first type 2 is in a position which is in axial direction above the middle position of the region between two adjacent spacers of the upper side 4 of the next annular disc of the first type 2 in the central annular region 1.

Each of the sixteen spacers 8 of the upper side 4 of each annular disc of the first type 2 is in a position aligned one above another with the sixteen spacers 8 of the upper side 4 of the annular disc of the first type 2 which is stacked after the next annular disc of the first type 2 in the central annular region. Each of the sixteen spacers 8 of the underside 5 of each annular disc of the first type 2 is in a position aligned one above another with the sixteen spacers 8 of the underside 5 of the annular disc of the first type 2 which is stacked after the next annular disc of the first type 2 in the central annular region (see Figures 3G -3H).

The axial thickness of the annular discs of the first type 2 is larger than the axial thickness of the annular discs of the second type 3.

The central annular region is compressed. In Figure 3H, the compression of the central annular region is indicated by the arrow with the designation "F" for "force", symbolizing that a force is applied. The force "F" is applied as an axial load and is homogeneously distributed over the upper side of the uppermost annular disc 18. By applying the force "F", the central annular region 1 is compressed by a length equal to or greater than the difference in thermal expansion between the central annular region and the perforated pipe in the temperature range of 20 °C to operating temperature. By compressing the central annular region, the annular discs of the second type 3 are elastically bent by the force applied via the spacers of the adjacent annular discs of the first type 2 which have contact with the respective annular disc of the second type 3. The elastic bending is shown in Figure 3H somewhat exaggerated, in the real separating device the difference in height between the highest and the lowest point of an annular disc of the second type 3 is in the range of 10 to 50 µm. As a result of this elastic bending of the annular discs of the second type 3, the total length of the central annular region is reduced, by a length equal to or greater than the difference in thermal expansion between the central annular region and the perforated pipe in the temperature range of 20 °C to operating temperature.

At operating temperature of the separating device, the compressed central annular region decompresses at least partially, thereby compensating the differences in thermal expansion of the central annular region and the perforated pipe.

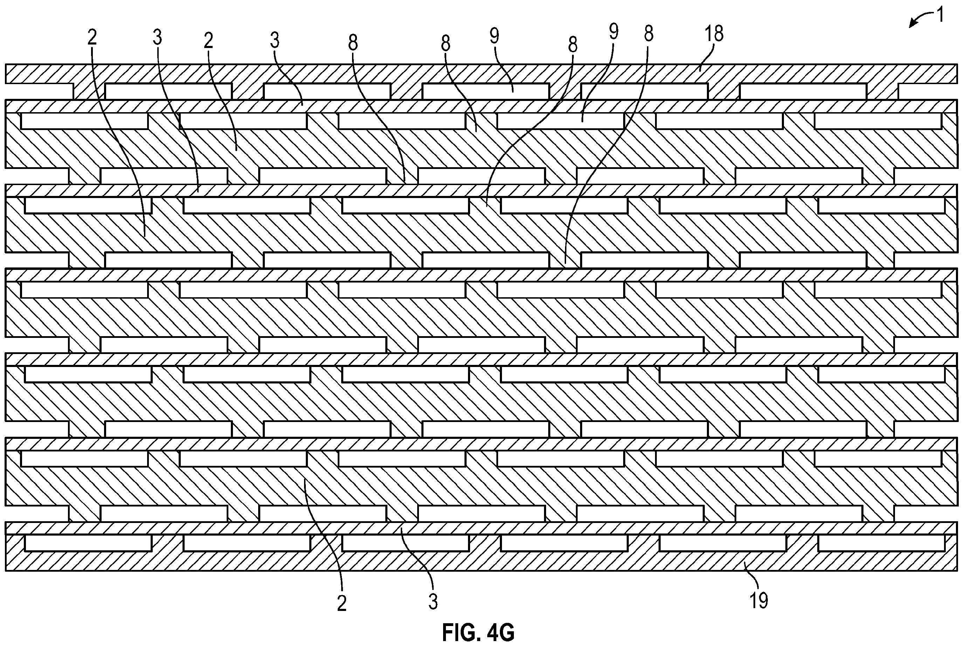

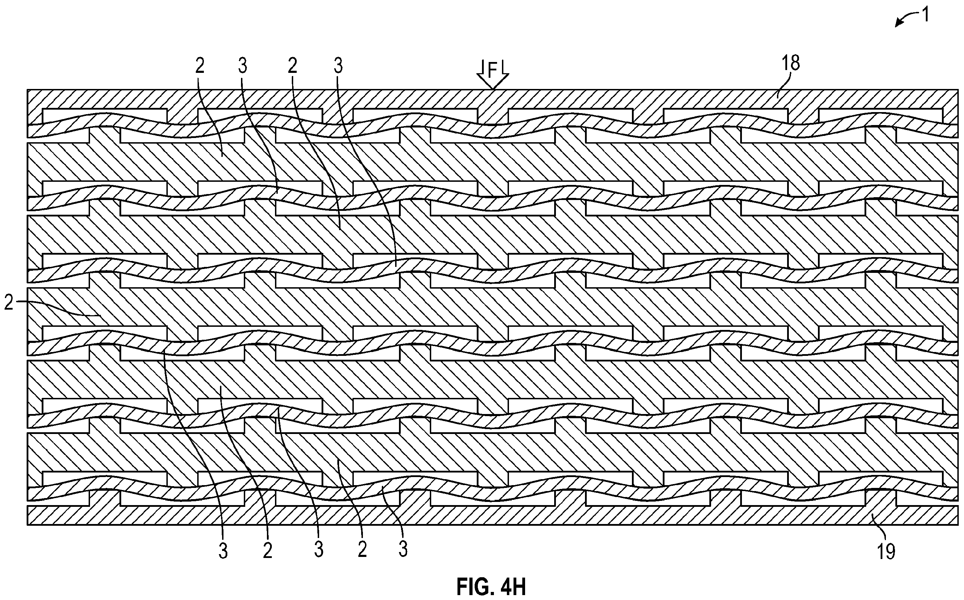

In Figures 4A - 4H a further embodiment of a central annular region of a separating device as disclosed herein is represented. Figures 4A - 4C show various details of an individual annular disc of the first type 2. Figures 4D - 4H show the central annular region 1 constructed from annular discs of the first type 2 of Figures 4A - 4C and from annular discs of the second type 3, representing various details of the stack of annular discs. Figure 4A shows a plan view of the upper side 4 of an annular disc of the first type 2, Figure 4B shows a cross-sectional view along the sectional line denoted in Figure 4A by "4B", Figure 4C shows a 3D view of the annular disc of the first type 2. Figure 4D shows a cross-sectional view of the central annular region 1 constructed from annular discs of the first type 2 of Figures 4A - 4C and from annular discs of the second type 3. Figure 4E shows an enlarged detail of the cross-sectional view of Figure 4D. Figure 4F shows a 3D view of the central annular region 1. Figures 4G and 4H show a representation of the outer circumferential surface of the central annular region 1, where the outer circumferential surface has been unrolled to a 2D representation. In the 2D representation, it is easier to see how the annular discs are stacked in the central annular region. Figure 4G shows the outer circumferential surface of the central annular region as stacked and before the central annular region has been compressed, Figure 4H shows the outer circumferential surface of the central annular region after compression. At the upper and lower ends of the central annular region 1, annular discs 18 and 19 may be stacked which have spacers only on one side, i.e. for annular disc 18 at the upper end of the central annular region only on the underside, and for annular disc 19 at the lower end of the central annular region only on the upper side. The spacers of annular discs 18 and 19 are directed towards the adjacent annular discs 3 of the central annular region 1. The other side of the annular discs 18 and 19 has a plane surface formed at right angles to the central axis.

The removal of the solid particles takes place at the inlet opening of a separating gap 9, which may be divergent, i.e. opening, in the direction of flow (see Figures 4D and 4E) and is formed between an annular disc of the first type 2 and an annular disc of the second type 3 lying one over the other in the central annular region 1. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The upper side 4 of each annular disc of the first type 2 has sixteen spacers 8 distributed over its circumference (Figure 4A). The underside 5 of each annular disc of the first type 2 also has sixteen spacers 8 distributed over its circumference. The sixteen spacers 8 of the upper side 4 and of the underside 5 of each annular disc of the first type 2 are distributed homogeneously along the circumference of the annular disc so that there is an equal distance between each pair of two adjacent spacers. Each of the sixteen spacers 8 of the upper side 4 of each annular disc of the first type 2 is in a position opposite to a position between two adjacent spacers 8 of the underside 5 of the respective annular disc (see Figure 4C).

In the embodiment shown in Figures 4A - 4H, each of the sixteen spacers 8 of the upper side 4 of each annular disc 2 of the first type is in a position opposite to the middle position between two adjacent spacers 8 of the underside 5 of the respective annular disc. The spacers 8 are of a defined height, with the aid of which the height of the separating gap 9 (gap width of the filter gap, filter width) is set. The spacers 8 are not separately applied or subsequently welded-on spacers, they are formed directly in production, during the shaping of the annular discs.

The contact area 16 of the spacers 8 is planar (see Figures 4C, 4E), so that the spacers 8 have a planar contact area with the adjacent annular disc. The spacers 8 of the upper side 4 of each annular disc of the first type 2 have a planar contact area with the underside 7 of the adjacent annular disc of the second type 3, and the spacers 8 of the underside 5 of each annular disc of the first type 2 have a planar contact area with the upper side 6 of the adjacent annular disc of the second type 3.

The upper side 4 of the annular discs of the first type 2 having sixteen spacers 8 is inwardly sloping, in the regions between the spacers. The underside 5 of the annular discs of the first type 2 having sixteen spacers 8 is also inwardly sloping, in the regions between the spacers. The thicker side of the ring cross-section is lying on the outside, i.e. on the inlet side of the flow to be filtered.

The upper side 6 and the underside 7 of the annular discs of the second type 3 do not comprise any spacers. The upper side 6 and the underside 7 of the annular discs of the second type 3 is formed as smooth and planar and at right angles to the disc axis and the central axis of the central annular region.

The annular discs of the first type 2 and the annular discs of the second type 3 are stacked in an alternating manner in the central annular region 1 (see Figure 4D - 4H).

The annular discs 2, 3 are stacked in such a way that a separating gap 9 for the removal of solid particles is present in each case between adjacent annular discs 2, 3 (see Figures 4D, 4E).

Each of the sixteen spacers 8 of the upper side 4 of each annular disc of the first type 2 is in a position which is in axial direction below the region between two adjacent spacers 8 of the underside 5 of the next annular disc of the first type 2 in the central annular region 1, and each of the sixteen spacers 8 of the underside 5 of each annular disc of the first type 2 is in a position which is in axial direction above the region between two adjacent spacers 8 of the upper side 4 of the next annular disc of the first type 2 in the central annular region 1 (see Figures 4G - 4H).

Each of the sixteen spacers 8 of the upper side 4 of each annular disc of the first type 2 is in a position which is in axial direction below the middle position of the region between two adjacent spacers of the underside 5 of the next annular disc of the first type 2 in the central annular region 1, and each of the sixteen spacers of the underside 5 of each annular disc of the first type 2 is in a position which is in axial direction above the middle position of the region between two adjacent spacers of the upper side 4 of the next annular disc of the first type 2 in the central annular region 1 (see Figures 4G - 4H).

Each of the sixteen spacers 8 of the upper side 4 of each annular disc of the first type 2 is in a position aligned one above another with each of the sixteen spacers 8 of the upper side 4 of the next annular disc of the first type 2 in the central annular region 1, and each of the sixteen spacers 8 of the underside 5 of each annular disc of the first type 2 is in a position aligned one above another with each of the two or more spacers 8 of the underside 5 of the next annular disc of the first type 2 in the central annular region 1 (see Figures 4G - 4H).

The axial thickness of the annular discs of the first type 2 is larger than the axial thickness of the annular discs of the second type 3.

The central annular region is compressed. In Figure 4H, the compression of the central annular region is indicated by the arrow with the designation "F" for "force", symbolizing that a force is applied. The force "F" is applied as an axial load and is homogeneously distributed over the upper side of the uppermost annular disc 18. By applying the force "F", the central annular region 1 is compressed by a length equal to or greater than the difference in thermal expansion between the central annular region and the perforated pipe in the temperature range of 20 °C to operating temperature. By compressing the central annular region, the annular discs of the second type 3 are elastically bent by the force applied via the spacers of the adjacent annular discs of the first type 2 which have contact with the respective annular disc of the second type 3. The elastic bending is shown in Figure 4H somewhat exaggerated, in the real separating device the difference in height between the highest and the lowest point of an annular disc of the second type is in the range of 10 to 50 µm. As a result of this elastic bending of the annular discs of the second type 3, the total length of the central annular region is reduced, by a length equal to or greater than the difference in thermal expansion between the central annular region and the perforated pipe in the temperature range of 20 °C to operating temperature.

At operating temperature of the separating device, the compressed central annular region decompresses at least partially, thereby compensating the differences in thermal expansion of the central annular region and the perforated pipe.

The separating device according to the present disclosure may be used for removing solid particles from a fluid. A fluid as used herein means a liquid or a gas or combinations of liquids and gases.

The separating device according to the present disclosure may be used in extraction wells in oil and/or gas reservoirs for separating solid particles from volumetric flows of mineral oil and/or natural gas. The separating device may also be used for other filtering processes for removing solid particles from fluids outside of extraction wells, processes in which a great abrasion resistance and a long lifetime of the separating device are required, such as for example for filtering processes in mobile and stationary storage installations for fluids or for filtering processes in naturally occurring bodies of water, such as for instance in the filtering of seawater. The separating device disclosed herein can also be used in a process for extracting ores and minerals. In the extraction of ore and many other minerals, there are problems of abrasion and erosion in the removal of solid particles from fluid flows. The separating device according to the present disclosure is particularly suitable for the separation of solid particles from fluids, in particular from mineral oil, natural gas and water, in extraction wells in which high and extremely high rates of flow and delivery volumes occur.

### Examples

The examples show that the required compression of the central annular region can be achieved by varying the compressive force, the number of spacers and the thickness of the annular discs of the second type.

### Example 1

A separating device according to Figures 3A - 3H is assembled having a central annular region with 297 annular discs made of sintered silicon carbide. The Young's modulus of the sintered silicon carbide material is 440 GPa. The annular discs have an outer diameter of 172 mm and a radial width of 14 mm. The total length of the central annular region is 1.5 m. The annular discs of the first type have 12 spacers with a planar contact surface on the upper side and 12 spacers with a planar contact surface on the underside of each annular disc of the first type. The distance between each pair of adjacent spacers on the upper side and on the underside is 35.8 mm. The annular discs of the first type have an axial thickness of 5.5 mm, the annular discs of the second type have an axial thickness of 4.6 mm. The base pipe is made from steel. The coefficient of thermal expansion of the sintered silicon carbide material in the temperature region from 20 to 300 °C is 4 ^{∗} 10⁻⁶ / K, the coefficient of thermal expansion of the steel material of the base pipe in the temperature region from 20 to 300 °C is 12 ^{∗} 10⁻⁶ / K. The operating temperature of the separating device downhole is 118 °C, corresponding to a temperature increase of 98 K during deployment. The mismatch in thermal expansion between base pipe and central annular region as calculated from the dimensions of the central annular region and the coefficients of thermal expansion of steel and sintered silicon carbide is 1.180 mm. To maintain contact between the individual annular discs of the central annular region after deployment, it is required to compress the central annular region prior to deployment by at least the same length, i.e. by 1.180 mm. This is achieved by using a compressive force of 5.000 N, annular discs of the first type with 12 spacers on the upper side and underside having a planar contact surface and annular discs of the second type with a thickness of 4.6 mm.

A maximal deflection of 7.9 µm can be calculated from the compressive force, the Young's modulus of the sintered silicon carbide material, the distance between two adjacent spacers, and axial thickness and radial width of the annular discs. The maximal deflection is the maximal bending of the annular discs of the second type in axial direction, in a position between each pair of adjacent spacers of the adjacent annular disc of the first type.

### Example 2

A separating device according to Figures 3A - 3H is assembled having a central annular region with 326 annular discs made of sintered silicon carbide. The Young's modulus of the sintered silicon carbide material is 440 GPa. The annular discs have an outer diameter of 172 mm and a radial width of 14 mm. The total length of the central annular region is 1.5 m. The annular discs of the first type have 14 spacers with a planar contact surface on the upper side and 14 spacers with a planar contact surface on the underside of each annular disc. The distance between each pair of adjacent spacers on the upper side and on the underside is 29.9 mm. The annular discs of the first type have an axial thickness of 5.5 mm, the annular discs of the second type have an axial thickness of 3.7 mm. The base pipe is made from steel. The coefficient of thermal expansion of the sintered silicon carbide material in the temperature region from 20 to 300 °C is 4 ^{∗} 10⁻⁶ / K, the coefficient of thermal expansion of the steel material of the base pipe in the temperature region from 20 to 300 °C is 12 ^{∗} 10⁻⁶ / K. The operating temperature of the separating device downhole is 124 °C, corresponding to a temperature increase of 104 K during deployment. The mismatch in thermal expansion between base pipe and central annular region as calculated from the dimensions of the central annular region and the coefficients of thermal expansion of steel and sintered silicon carbide is 1.252 mm. To maintain contact between the individual annular discs of the central annular region after deployment it is required to compress the central annular region prior to deployment by at least the same length, i.e. by 1.252 mm. This is achieved by using a compressive force of 7.500 N, annular discs of the first type with 14 spacers on the upper side and underside having a planar contact surface and annular discs of the second type with a thickness of 3.7 mm.

A maximal deflection of 7.7 µm can be calculated from the compressive force, the Young's modulus of the sintered silicon carbide material, the distance between two adjacent spacers, and axial thickness and radial width of the annular disc The maximal deflection is the maximal bending of the annular discs of the second type in axial direction, in a position between each pair of adjacent spacers of the adjacent annular disc of the first type.

The thickness of the annular discs of the second type of Example 2 is lower than the thickness of the annular discs of the second type of Example 1. Compared to Example 1, a higher compressive force is needed to reduce the total length of the central annular region by compression by about 1.2 mm. This is due to the larger number of spacers and therefore the smaller distance between each pair of adjacent spacers of the upper side and underside of the annular discs of the first type.

### Example 3

A separating device according to Figures 3A - 3H is assembled having a central annular region with 337 annular discs made of sintered silicon carbide. The Young's modulus of the sintered silicon carbide material is 440 GPa. The annular discs have an outer diameter of 172 mm and a radial width of 14 mm. The total length of the central annular region is 1.5 m. The annular discs of the first type have 15 spacers with a planar contact surface on the upper side and 15 spacers with a planar contact surface on the underside of each annular disc. The distance between each pair of adjacent spacers on the upper side and on the underside is 27.6 mm. The annular discs of the first type have an axial thickness of 5.5 mm, the annular discs of the second type have an axial thickness of 3.4 mm. The base pipe is made from steel. The coefficient of thermal expansion of the sintered silicon carbide material in the temperature region from 20 to 300 °C is 4 ^{∗} 10⁻⁶ / K, the coefficient of thermal expansion of the steel material of the base pipe in the temperature region from 20 to 300 °C is 12 ^{∗} 10⁻⁶ / K. The operating temperature of the separating device downhole is 122 °C, corresponding to a temperature increase of 102 K during deployment. The mismatch in thermal expansion between base pipe and central annular region as calculated from the dimensions of the central annular region and the coefficients of thermal expansion of steel and sintered silicon carbide is 1.221 mm. To maintain contact between the individual annular discs of the central annular region after deployment it is required to compress the central annular region prior to deployment by at least the same length, i.e. by 1.221 mm. This is achieved by using a compressive force of 10.000 N, annular discs of the first type with 15 spacers on the upper side and underside having a planar contact surface and annular discs of the second type with a thickness of 3.4 mm.

A maximal deflection of 7.2 µm can be calculated from the compressive force, the Young's modulus of the sintered silicon carbide material, the distance between two adjacent spacers, and axial thickness and radial width of the annular disc The maximal deflection is the maximal bending of the annular discs of the second type in axial direction, in a position between each pair of adjacent spacers of the adjacent annular disc of the first type.

The thickness of the annular discs of the second type of Example 3 is lower than the thickness of the annular discs of the second type of Example 1 and of Example 2. Compared to Example 2, a higher compressive force is needed to reduce the total length of the central annular region by compression by about 1.2 mm. This is due to the larger number of spacers and therefore the smaller distance between each pair of adjacent spacers of the upper side and underside of the annular discs of the first type.

## Claims

1. A separating device for removing solid particles from fluids, comprising:
a stack of at least eight annular discs defining a central annular region (1) along a central axis, and
a supporting structure (10, 11, 12) for axial bracing of the central annular region (1),
and wherein each annular disc (2, 3) has an upper side (4, 6) and an underside (5, 7), and wherein the central annular region (1) comprises at least four annular discs of a first type and at least four annular discs of a second type, and wherein each annular disc of the central annular region (1) is an annular disc of the first type or an annular disc of the second type, and wherein the upper side (4) of each annular disc of the first type (2) has two or more spacers (8) which are distributed over the circumference of the upper side (4) of each annular disc of the first type (2), and wherein the underside (5) of each annular disc of the first type (2) has two or more spacers (8) which are distributed over the circumference of the underside (5) of each annular disc of the first type (2), and wherein the upper side (6) and the underside (7) of each annular disc of the second type (3) do not comprise any spacers, and wherein the annular discs of the first type (2) and the annular discs of the second type (3) are stacked in an alternating manner in the central annular region (1), and wherein the spacers (8) of the upper side (4) of each annular disc of the first type (2) contact the underside (7) of the adjacent annular disc of the second type (3), and wherein the spacers (8) of the underside (5) of each annular disc of the first type (2) contact the upper side (6) of the adjacent annular disc of the second type (3), and wherein the annular discs (2, 3) are stacked in such a way that a separating gap (9) for the removal of solid particles is present in each case between adjacent annular discs (2, 3), and wherein each of the two or more spacers (8) of the upper side (4) of each annular disc of the first type (2) is in a position which is in axial direction below the region between two adjacent spacers (8) of the underside (5) of the next annular disc of the first type (2) in the central annular region (1), and wherein each of the two or more spacers (8) of the underside (5) of each annular disc of the first type (2) is in a position which is in axial direction above the region between two adjacent spacers (8) of the upper side (4) of the next annular disc of the first type (2) in the central annular region (1),
and wherein the central annular region (1) is compressed.

2. The separating device according to claim 1, wherein the supporting structure for axial bracing of the central annular region (1) comprises one or more rods arranged within the central annular region.

3. The separating device according to claim 1, wherein the supporting structure for axial bracing of the central annular region (1) comprises
a perforated pipe (10) which is co-centric with and located inside the central annular region (1), and
an end cap (11, 12) at the upper end and an end cap at the lower end of the central annular region (1), the end cap (11, 12) being co-centric with the perforated pipe (10) and being firmly connected to the perforated pipe (10).

4. The separating device according to claim 2, wherein the central annular region is compressed by a force sufficient to reduce the total length of the central annular region by a length equal to or greater than the difference in thermal expansion between the central annular region (1) and the one or more rods in the temperature range of 20 °C to operating temperature.

5. The separating device according to claim 3, wherein the central annular region is compressed by a force sufficient to reduce the total length of the central annular region by a length equal to or greater than the difference in thermal expansion between the central annular region (1) and the perforated pipe (10) in the temperature range of 20 °C to operating temperature.

6. The separating device according to any of claims 1 to 5, wherein the two or more spacers (8) of the upper side (4) of each annular disc of the first type (2) are in a position aligned one above another with the two or more spacers (8) of the upper side (4) of the annular disc of the first type (2) which is stacked after the next annular disc of the first type (2) in the central annular region (1), and wherein the two or more spacers (8) of the underside (5) of each annular disc of the first type (2) are in a position aligned one above another with the two or more spacers (8) of the underside (5) of the annular disc of the first type (2) which is stacked after the next annular disc of the first type (2) in the central annular region (1).

7. The separating device according to any one of claims 1 to 6, wherein the two or more spacers (8) of the upper side (4) and of the underside (5) of each annular disc of the first type (2) are distributed homogeneously along the circumference of the annular disc so that there is an equal distance between each pair of two adjacent spacers.

8. The separating device according to any one of claims 1 to 7, wherein each of the two or more spacers (8) of the upper side (4) of each annular disc of the first type (2) is in a position aligned opposite to a spacer (8) of the underside (5) of the respective annular disc.

9. The separating device according to any one of claims 1 to 7, wherein each of the two or more spacers (8) of the upper side (4) of each annular disc of the first type (2) is in a position opposite to a position between two adjacent spacers (8) of the underside (5) of the respective annular disc.

10. The separating device according to claim 9, wherein each of the two or more spacers (8) of the upper side (4) of each annular disc of the first type (2) is in a position opposite to the middle position between two adjacent spacers (8) of the underside (5) of the respective annular disc.

11. The separating device according to claim 9 or 10, wherein the two or more spacers (8) of the upper side (4) of each annular disc of the first type (2) are in a position aligned one above another with the two or more spacers (8) of the upper side (4) of the next annular disc of the first type (2) in the central annular region (1), and wherein the two or more spacers (8) of the underside (5) of each annular disc of the first type (2) are in a position aligned one above another with the two or more spacers (8) of the underside (5) of the next annular disc of the first type (2) in the central annular region (1).

12. The separating device according to any one of claims 1 to 11, wherein each of the two or more spacers (8) of the upper side (4) of each annular disc of the first type (2) is in a position which is in axial direction below the middle position of the region between two adjacent spacers of the underside (5) of the next annular disc of the first type (2) in the central annular region (1), and wherein each of the two or more spacers of the underside (5) of each annular disc of the first type (2) is in a position which is in axial direction above the middle position of the region between two adjacent spacers of the upper side (4) of the next annular disc of the first type (2) in the central annular region (1).

13. The separating device according to any one of claims 1 to 12, wherein the axial thickness of the annular discs of the first type (2) is larger than the axial thickness of the annular discs of the second type (3).

14. The separating device according to any one of claims 1 to 13, wherein each annular disc (2, 3) comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

15. Use of the separating device of any one of claims 1 to 14 for removing solid particles from fluids
in a process for extracting fluids from extraction wells, or
in water or in storage installations for fluids, or
in a process for extracting ores and minerals.
